# EUROPEAN PATENT APPLICATION

(11) **EP 4 517 595 A1**
(43) Date of publication of application: **05.03.2025**
(21) Application number: 23306444.3
(22) Date of filing: 31.08.2023
(51) Int. Cl.: G06N 3/082, G06N 3/0985

(54) **SYSTEM AND METHOD FOR AUTOMATIC GENERATION OF A TARGET MACHINE LEARNING ALGORITHM**

(71) Applicant: OVH, 59100 Roubaix (FR)
(72) Inventor: PARMENTIER, Laurent, 59700 Marcq en Baroeul (FR); AGUSTI, Maxime, 59100 Roubaix (FR); NICOL, Olivier, 59200 Tourcoing (FR)
(74) Representative: BCF Global

(57) **Abstract**

Method and system for automatic generation of a target machine learning (ML) pipeline for executing a pre-determined task. The method includes accessing candidate ML pipelines, accessing a plurality of variation operators associated with probability distribution functions, accessing training data and iteratively updating the candidate ML pipelines. An update iteration of a given candidate ML pipelines includes applying, in parallel, one or more of the variation operators to the candidate ML pipeline, training the candidate ML pipeline based on the training data, executing the candidate ML pipeline to determine a performance score, dynamically adjusting the probability distribution functions of the one or more variation operators based on the performance scores and selecting a given variation operator based on the probability distribution functions thereof for a current iteration. The method also includes identifying a given candidate ML pipeline having a highest performance score for executing the pre-determined task.

## Description

### FIELD

The present technology relates to Machine Learning Algorithms (MLAs). In particular, a system and methods for automatically generating a target machine learning algorithm (MLA) for executing a pre-determined task are disclosed.

### BACKGROUND

Operating large infrastructures connected to the Internet, such as a data center, typically involves monitoring and/or controlling a very large number of hardware equipment while ensuring quality of service and security for clients/users of the data center. Such hardware equipment may comprise servers, cooling systems, power distribution units, networking devices (switch, rooters, etc.) and dedicated systems allowing monitoring, orchestrating and controlling of the various hardware equipment. In certain instances, orchestrating and controlling may involve collecting tremendous amount of data, such as for example, but without being limitative, health monitoring data (e.g., temperature of a hardware component, temperature of a cooling medium, operational status, performance indicator, etc.), data relating to network traffic monitoring/filtering (e.g., to detect or prevent potential attacks or intrusions) and/or data relating to user's behaviors (e.g., to detect or prevent potential frauds).

Recent developments in the field of artificial intelligence, in particular in the field of Machine Learning (ML), has enabled automatic building of mathematical models from sample data (i.e. training data) which may then be executed for the purpose of decision/prediction making. ML approaches have demonstrated to be well suited for applications relating to predictions based on heath monitoring data or detection of network intruders. Nevertheless, bringing ML approaches to the field of operating large scale infrastructures, such as data centers, still present challenges given (1) the tremendous amount of data on which ML models need to be trained and operated and (2) a limited amount of time and/or processing power available and/or memory space available to generate a ML model properly suited and ready to be put in production for a given circumstance. Improvements are still therefore desirable.

An example of recent developments in the field of ML relates to automated machine learning (AutoML) which is a process of automating the tasks of applying machine learning algorithms for executing a pre-determined task that recently gained traction with the rise of machine learning (ML). Therefore, AutoML technologies may ease and accelerate the research of models without necessarily knowing and analyzing the overall instance (i.e. type of machine problem), dataset format, or the search space.

However, typical Auto-ML technologies do not let a user to choose a strategy for generating a custom MLA. In addition, generation strategies of these Auto-ML technologies tend to iteratively select variation operators according to uniform distributions to modify the MLA being generated without proper optimisation of said selection. In addition to the drawbacks (1) and (2) set forth in the paragraphs above, typical Auto-ML approaches add certain limitations such as, (3) interpretability and transparency of the strategy used to generate a target MLA are almost inexistent, and (4) non-optimised strategy for generating the target MLA.

The subject matter discussed in the background section should not be assumed to be prior art merely as a result of its mention in the background section. Similarly, a problem mentioned in the background section or associated with the subject matter of the background section should not be assumed to have been previously recognized in the prior art. The subject matter in the background section merely represents different approaches.

### SUMMARY

Embodiments of the present technology have been developed based on developers' appreciation of shortcomings associated with the prior art.

In a first broad aspect of the present technology, there is provided a computer-implemented method for automatically generating a target machine learning (ML) pipeline for executing a pre-determined task. The method includes accessing a plurality of candidate ML pipelines, each candidate ML pipeline being associated with a set of hyperparameters and including one or more operations. The method further includes accessing a plurality of variation operators, each variation operator being associated with a probability distribution function and configured to be applied to one or more of the candidate ML pipelines, an application of a given variation operator on a given candidate ML pipeline resulting in an update of at least one of the hyperparameters and the one or more operations of the candidate ML pipelines. The method further includes accessing training data and iteratively updating the candidate ML pipelines. An update iteration includes applying one or more of the variation operators to the candidate ML pipeline, training the candidate ML pipeline based on the training data, executing the candidate ML pipeline on a dataset associated with ground-truth labels to determine a performance score, the performance score being indicative of a distance between respective an output of the candidate ML pipeline and the ground-truth labels of the dataset, dynamically adjusting the probability distribution functions of the one or more variation operators based on the performance scores and selecting a given variation operator among the one or more variation operators based on the dynamically adjusted probability distribution functions thereof. The method further includes identifying a given trained candidate ML pipeline having a highest performance score as the target ML pipeline subsequent to the iteratively update of the candidate ML pipelines and accessing time series data representative of operation parameters of equipment of the data center, the time series data being indicative of at least one of (i) an operation parameter of the equipment, (ii) an operation parameter of the cooling device, and/or (iii) a data flow rate of at least one computing device. The method also includes operating the identified trained candidate ML pipeline using the time series data to perform at least one of (i) identifying potential failure of an equipment of a data center based on the time series data, (ii) identifying potential failure of a cooling device of a data center based on the time series data, and/or (iii) identifying a potential Denial-of-Service attack at the data center based on the time series data.

Broadly speaking, the method and systems recited herein may help to provide a ML pipeline that is trained for a executing a pre-determined task and that is ready to be put in production for a given circumstance. Given the very large amount of data relating to operations of a data center (e.g., operation data, network data, usage data, user data and/or content data), relying on ML approaches to process the very large amount of data and generate a relevant ML pipeline that properly suits an operational context is a technical problem. This technical problem is further emphasised by a need to generate an appropriate ML pipeline within a limited period of time so as to adapt real-time operational needs while having access to limited processing and/or memory resources. As the person skilled in the art of the present technology will appreciate, generating ML pipelines and ML models suited for a large set of data typically involves heavy processing and/or large memory space usage over a long period of time. In response and as will be described in greater details herein after, the present technology enables identification of ML pipelines that are relevant to the pre-determined task. The ML pipelines are further iteratively trained, performances thereof being evaluated at each iteration to determine which variation operator should be applied to any of the said ML pipelines. Performances of the optimized ML pipelines may be compared to identify a best performing modified ML pipeline among the optimized ML pipelines. The iterative process for obtaining the optimized ML pipelines provides interpretability and transparency of the strategy used to generate a target ML pipeline (i.e. best performing modified ML pipeline) and a generation strategy of said target ML pipeline is optimised for the pre-determined task.

In some non-limiting implementations, selecting a given variation operator among the one or more variation operators based on the probability distribution functions thereof includes draw a sample from each dynamically adjusted probability distribution function, identifying the dynamically adjusted probability distribution function for which the sample has a highest value among the drawn samples and selecting the variation operator that caused adjustment of the identified probability distribution function.

In some non-limiting implementations, selecting a given variation operator among the plurality of variation operators includes selecting the variation operator having the probability distribution function having the highest mean value among the variation operators.

In some non-limiting implementations, each variation operator includes at least one of a mutation operation and a crossover operation.

In some non-limiting implementations, the pre-determined task is a time series classification task, the training data comprising time series data.

In some non-limiting implementations, the probability distribution functions of the variation operators are initially set to a same default distribution.

In some non-limiting implementations, the default distribution is a normal distribution.

In some non-limiting implementations, the default distribution is based on at least one of the pre-determined task, a data type of the training data, the plurality of candidate ML pipelines, and the plurality of variation operators.

In some non-limiting implementations, the iterative update of the candidate ML pipelines stops once at least of one a pre-determined time span after a first update of the candidate ML pipelines has elapsed, a pre-determined number of update iterations is reached, and a performance score of at least one of the trained candidate ML pipelines is above a predetermined threshold.

In some non-limiting implementations, the dynamically adjustment of the probability distribution functions involves employing a Thompson Sampling strategy.

In some non-limiting implementations, the pre-determined task includes (i) identifying potential failure of an equipment of a data center based on the time series data, the time series data being indicative of an operation parameter of the equipment, (ii) identifying potential failure of a cooling device of a data center based on the time series data, the time series data being indicative of an operation parameter of the cooling device, and/or (iii) identifying a potential Denial-of-Service attack at the data center based on the time series data, the time series data being indicative of a data flow rate of at least one computing device thereof.

In some non-limiting implementations, the one or more of the variation operators are applied in parallel to the candidate ML pipeline.

In a second broad aspect of the present technology, there is provided a system including a controller and a memory storing a plurality of executable instructions which, when executed by the controller, cause the system to perform the method.

In a third broad aspect of the present technology, there is provided a non-transitory computer-readable medium comprising computer-readable instructions that, upon being executed by a system, cause the system to perform the method.

In a fourth broad aspect of the present technology, there is provided a computer-implemented method for pushing a target machine learning (ML) pipeline in production mode in an infrastructure of a data center for monitoring said data center. The method includes accessing a plurality of candidate ML pipelines configured to perform a time series classification (TSC)-related task, each candidate ML pipeline being associated with a set of hyperparameters and including one or more operations. The method further includes accessing a plurality of variation operators, each variation operator being associated with a probability distribution function and configured to be applied to one or more of the candidate ML pipelines, an application of a given variation operator on a given candidate ML pipeline resulting in an update of at least one of the hyperparameters and the one or more operations of the candidate ML pipelines. The method further includes accessing training data and iteratively updating the candidate ML pipelines. An update iteration includes applying one or more of the variation operators to the candidate ML pipeline, training the candidate ML pipeline based on the training data, executing the trained candidate ML pipeline on a dataset associated with ground-truth labels to determine a performance score, the performance score being indicative of a distance between respective an output of the candidate ML pipeline and the ground-truth labels of the dataset, dynamically adjusting the probability distribution functions of the one or more variation operators based on the performance scores and selecting a given variation operator among the one or more variation operators based on the dynamically adjusted probability distribution functions thereof. The method further includes identifying a given trained candidate ML pipeline having a highest performance score as the target ML pipeline subsequent to the iteratively update of the candidate ML pipelines, accessing time series data representative of operation parameters of computing devices of the data center and operating the identified trained candidate ML pipeline using the time series data to perform at least one of (i) identifying potential failure of an equipment of a data center based on the time series data, the time series data being indicative of an operation parameter of the equipment, (ii) identifying potential failure of a cooling device of a data center based on the time series data, the time series data being indicative of an operation parameter of the cooling device, and/or (iii) identifying a potential Denial-of-Service attack at the data center based on the time series data, the time series data being indicative of a data flow rate of at least one computing device thereof.

In some non-limiting implementations, selecting a given variation operator among the one or more variation operators based on the probability distribution functions thereof includes draw one sample from each dynamically adjusted probability distribution function, identifying the dynamically adjusted probability distribution function for which the sample has a highest value among the drawn samples and selecting the variation operator that caused adjustment of the identified probability distribution function.

In some non-limiting implementations, selecting a given variation operator among the plurality of variation operators includes selecting the variation operator having the probability distribution function having the highest mean value among the variation operators.

In some non-limiting implementations, each variation operator includes at least one of a mutation operation and a crossover operation.

In some non-limiting implementations, the pre-determined task is a time series classification task, the training data comprising time series data.

In some non-limiting implementations, the probability distribution functions of the variation operators are initially set to a same default distribution.

In some non-limiting implementations, the default distribution is a normal distribution.

In some non-limiting implementations, the default distribution is based on at least one of the pre-determined task, a data type of the training data, the plurality of candidate ML pipelines, and the plurality of variation operators.

In some non-limiting implementations, the iterative update of the candidate ML pipelines stops once at least of one a pre-determined time span after a first update of the candidate ML pipelines has elapsed, a pre-determined number of update iterations is reached, and a performance score of at least one of the trained candidate ML pipelines is above a predetermined threshold.

In some non-limiting implementations, the dynamically adjustment of the probability distribution functions involves employing a Thompson Sampling strategy.

In some non-limiting implementations, the one or more of the variation operators are applied in parallel to the candidate ML pipeline.

In a fifth broad aspect of the present technology, there is provided a system including a controller and a memory storing a plurality of executable instructions which, when executed by the controller, cause the system to perform the method.

In a sixth broad aspect of the present technology, there is provided a non-transitory computer-readable medium comprising computer-readable instructions that, upon being executed by a system, cause the system to perform said method.

In the context of the present specification, a "server" is a computer program that is running on appropriate hardware and is capable of receiving requests (e.g., from client devices) over a network, and carrying out those requests, or causing those requests to be carried out. The hardware may be one physical computer or one physical computer system, but neither is required to be the case with respect to the present technology. In the present context, the use of the expression a "server" is not intended to mean that every task (e.g., received instructions or requests) or any particular task will have been received, carried out, or caused to be carried out, by the same server (i.e., the same software and/or hardware); it is intended to mean that any number of software elements or hardware devices may be involved in receiving/sending, carrying out or causing to be carried out any task or request, or the consequences of any task or request; and all of this software and hardware may be one server or multiple servers, both of which are included within the expression "at least one server".

In the context of the present specification, "user device" is any computer hardware that is capable of running software appropriate to the relevant task at hand. Thus, some (non-limiting) examples of user devices include personal computers (desktops, laptops, netbooks, etc.), smartphones, and tablets, as well as network equipment such as routers, switches, and gateways. It should be noted that a device acting as a user device in the present context is not precluded from acting as a server to other user devices. The use of the expression "a user device" does not preclude multiple user devices being used in receiving/sending, carrying out or causing to be carried out any task or request, or the consequences of any task or request, or steps of any method described herein.

In the context of the present specification, a "database" is any structured collection of data, irrespective of its particular structure, the database management software, or the computer hardware on which the data is stored, implemented or otherwise rendered available for use. A database may reside on the same hardware as the process that stores or makes use of the information stored in the database or it may reside on separate hardware, such as a dedicated server or plurality of servers.

In the context of the present specification, the expression "information" includes information of any nature or kind whatsoever capable of being stored in a database. Thus information includes, but is not limited to audiovisual works (images, movies, sound records, presentations etc.), data (location data, numerical data, etc.), text (opinions, comments, questions, messages, etc.), documents, spreadsheets, lists of words, etc.

In the context of the present specification, the expression "component" is meant to include software (appropriate to a particular hardware context) that is both necessary and sufficient to achieve the specific function(s) being referenced.

In the context of the present specification, the expression "computer usable information storage medium" is intended to include media of any nature and kind whatsoever, including RAM, ROM, disks (CD-ROMs, DVDs, floppy disks, hard drivers, etc.), USB keys, solid statedrives, tape drives, etc.

In the context of the present specification, unless expressly provided otherwise, an "indication" of an information element may be the information element itself or a pointer, reference, link, or other indirect mechanism enabling the recipient of the indication to locate a network, memory, database, or other computer-readable medium location from which the information element may be retrieved. For example, an indication of a document could include the document itself (i.e. its contents), or it could be a unique document descriptor identifying a file with respect to a particular file system, or some other means of directing the recipient of the indication to a network location, memory address, database table, or other location where the file may be accessed. As one skilled in the art would recognize, the degree of precision required in such an indication depends on the extent of any prior understanding about the interpretation to be given to information being exchanged as between the sender and the recipient of the indication. For example, if it is understood prior to a communication between a sender and a recipient that an indication of an information element will take the form of a database key for an entry in a particular table of a predetermined database containing the information element, then the sending of the database key is all that is required to effectively convey the information element to the recipient, even though the information element itself was not transmitted as between the sender and the recipient of the indication.

In the context of the present specification, the words "first", "second", "third", etc. have been used as adjectives only for the purpose of allowing for distinction between the nouns that they modify from one another, and not for the purpose of describing any particular relationship between those nouns. Thus, for example, it should be understood that, the use of the terms "first server" and "third server" is not intended to imply any particular order, type, chronology, hierarchy or ranking (for example) of/between the server, nor is their use (by itself) intended imply that any "second server" must necessarily exist in any given situation. Further, as is discussed herein in other contexts, reference to a "first" element and a "second" element does not preclude the two elements from being the same actual real-world element. Thus, for example, in some instances, a "first" server and a "second" server may be the same software and/or hardware, in other cases they may be different software and/or hardware.

Implementations of the present technology each have at least one of the above-mentioned objects and/or aspects, but do not necessarily have all of them. It should be understood that some aspects of the present technology that have resulted from attempting to attain the above-mentioned object may not satisfy this object and/or may satisfy other objects not specifically recited herein.

Additional and/or alternative features, aspects and advantages of implementations of the present technology will become apparent from the following description, the accompanying drawings and the appended claims.

### BRIEF DESCRIPTION OF THE DRAWINGS

For a better understanding of the present technology, as well as other aspects and further features thereof, reference is made to the following description which is to be used in conjunction with the accompanying drawings, where:
Figure 1 illustrates an example of a computing device that may be used to implement any of the methods described herein in accordance with non-limiting embodiments of the present technology;
Figure 2 illustrates a diagram of a ML pipeline generation platform in accordance with an embodiment of the present technology;
Figure 3 is schematic representation of a ML pipeline in accordance with non-limiting embodiments of the present technology;
Figure 4 is a schematic representation of an MLA of the ML pipeline of Figure 3 modified by the ML pipeline generation platform of Figure 2 in accordance with non-limiting embodiments of the present technology;
Figure 5 illustrates two consecutive iterations of an iterative optimization of a ML pipeline in accordance with non-limiting embodiments of the present technology;
Figure 6 illustrates an illustrative evolution of probability distribution functions used to select variations operators on ML pipeline in accordance with non-limiting embodiments of the present technology;
Figure 7 illustrates a diagram of a data center in accordance with non-limiting embodiments of the present technology; and
Figure 8 illustrates flow diagram including steps of a method for automatically generating a target machine learning (ML) pipeline for executing a pre-determined task in accordance with non-limiting embodiments of the present technology.

It should also be noted that, unless otherwise explicitly specified herein, the drawings are not to scale.

### DETAILED DESCRIPTION

The examples and conditional language recited herein are principally intended to aid the reader in understanding the principles of the present technology and not to limit its scope to such specifically recited examples and conditions. It will be appreciated that those skilled in the art may devise various arrangements that, although not explicitly described or shown herein, nonetheless embody the principles of the present technology.

Furthermore, as an aid to understanding, the following description may describe relatively simplified implementations of the present technology. As persons skilled in the art would understand, various implementations of the present technology may be of a greater complexity.

In some cases, what are believed to be helpful examples of modifications to the present technology may also be set forth. This is done merely as an aid to understanding, and, again, not to define the scope or set forth the bounds of the present technology. These modifications are not an exhaustive list, and a person skilled in the art may make other modifications while nonetheless remaining within the scope of the present technology. Further, where no examples of modifications have been set forth, it should not be interpreted that no modifications are possible and/or that what is described is the sole manner of implementing that element of the present technology.

Moreover, all statements herein reciting principles, aspects, and implementations of the present technology, as well as specific examples thereof, are intended to encompass both structural and functional equivalents thereof, whether they are currently known or developed in the future. Thus, for example, it will be appreciated by those skilled in the art that any block diagrams herein represent conceptual views of illustrative circuitry embodying the principles of the present technology. Similarly, it will be appreciated that any flowcharts, flow diagrams, state transition diagrams, pseudo-code, and the like represent various processes that may be substantially represented in non-transitory computer-readable media and so executed by a computer or processor, whether or not such computer or processor is explicitly shown.

The functions of the various elements shown in the figures, including any functional block labeled as a "processor", may be provided through the use of dedicated hardware as well as hardware capable of executing software in association with appropriate software. When provided by a processor, the functions may be provided by a single dedicated processor, by a single shared processor, or by a plurality of individual processors, some of which may be shared. In some embodiments of the present technology, the processor may be a generalpurpose processor, such as a central processing unit (CPU) or a processor dedicated to a specific purpose, such as a digital signal processor (DSP). Moreover, explicit use of the term a "processor" should not be construed to refer exclusively to hardware capable of executing software, and may implicitly include, without limitation, application specific integrated circuit (ASIC), field programmable gate array (FPGA), read-only memory (ROM) for storing software, random access memory (RAM), and non-volatile storage. Other hardware, conventional and/or custom, may also be included.

Software modules, or simply modules which are implied to be software, may be represented herein as any combination of flowchart elements or other elements indicating performance of process steps and/or textual description. Such modules may be executed by hardware that is expressly or implicitly shown. Moreover, it should be understood that module may include for example, but without being limitative, computer program logic, computer program instructions, software, stack, firmware, hardware circuitry or a combination thereof which provides the required capabilities.

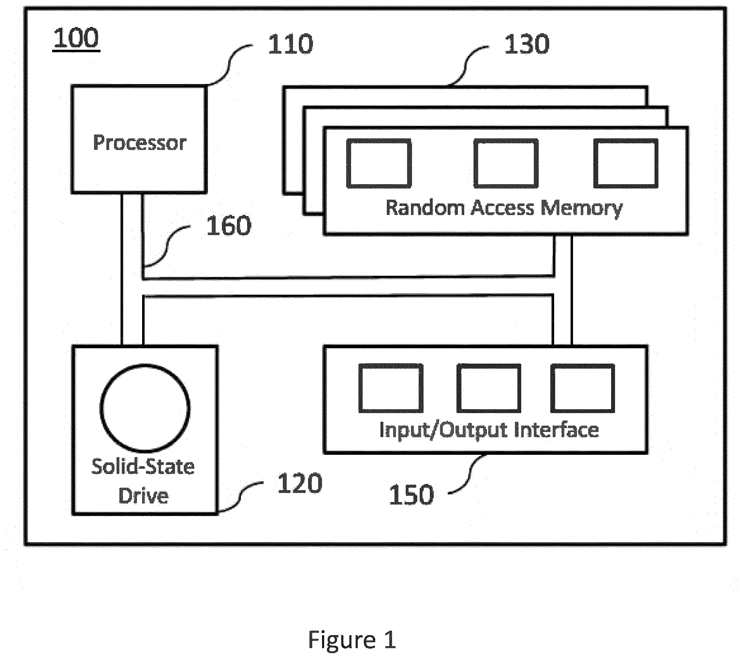

Referring to Figure 1, there is shown a diagram of a computer system 100 in accordance with an embodiment of the present technology is shown. In some embodiments, the computer system 100 may be implemented by any of a conventional personal computer, a computer dedicated to operating and/or monitoring systems relating to a data center, a controller and/or an electronic device (such as, but not limited to, a mobile device, a tablet device, a server, a controller unit, a control device, a monitoring device etc.) and/or any combination thereof appropriate to the relevant task at hand. In some embodiments, the computer system 100 comprises various hardware components including one or more single or multi-core processors collectively represented by a processor 110, a solid-state drive 120, a random access memory 130 and an input/output interface 150.

In some embodiments, the computer system 100 may also be a sub-system of one of the above-listed systems. In some other embodiments, the computer system 100 may be an "off the shelf' generic computer system. In some embodiments, the computer system 100 may also be distributed amongst multiple systems. The computer system 100 may also be specifically dedicated to the implementation of the present technology. As a person in the art of the present technology may appreciate, multiple variation operators as to how the computer system 100 is implemented may be envisioned without departing from the scope of the present technology.

Communication between the various components of the computer system 100 may be enabled by one or more internal and/or external buses 160 (e.g. a PCI bus, universal serial bus, IEEE 1394 "Firewire" bus, SCSI bus, Serial-ATA bus, ARINC bus, etc.), to which the various hardware components are electronically coupled.

The input/output interface 150 may allow enabling networking capabilities such as wire or wireless access. As an example, the input/output interface 150 may comprise a networking interface such as, but not limited to, a network port, a network socket, a network interface controller and the like. Multiple examples of how the networking interface may be implemented will become apparent to the person skilled in the art of the present technology. For example, but without being limitative, the networking interface may implement specific physical layer and data link layer standard such as Ethernet, Fibre Channel, Wi-Fi or Token Ring. The specific physical layer and the data link layer may provide a base for a full network protocol stack, allowing communication among small groups of computers on the same local area network (LAN) and large-scale network communications through routable protocols, such as Internet Protocol (IP).

According to implementations of the present technology, the solid-state drive 120 stores program instructions suitable for being loaded into the random access memory 130 and executed by the processor 110 for executing operating data centers based on a generated machine learning algorithm (MLA). For example, the program instructions may be part of a library or an application.

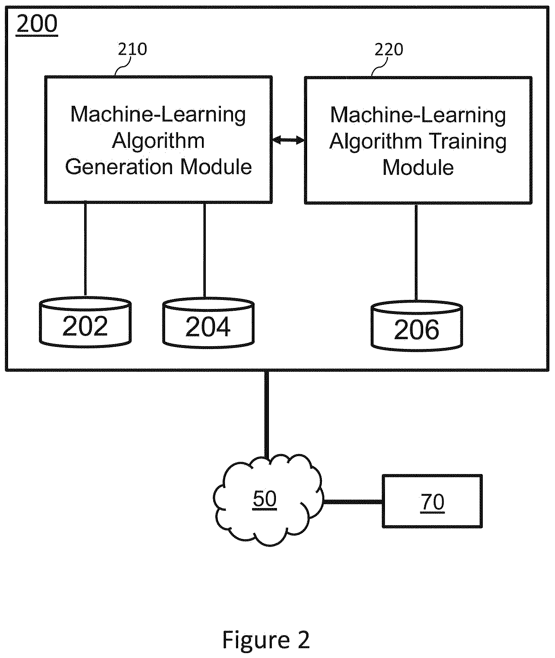

Turning now to Figure 2, an exemplary embodiment of a system 200 allowing generating an ML pipeline according to some implementations of the present technology. The system 200 may be implemented as the computer system 100 or have similar features. The system 200 aims at addressing at least some of the limitations of prior ML pipeline generation methods of typical AutoML technologies. In some embodiments, the system 200 may be referred to, without being limitative, as an ML pipeline generation platform. As an exemplary embodiment, the system 200 operates an ML pipeline generation module 210 and an ML pipeline training module 220. The system 200 may also include and/or access to multiple databases. As an example, the system 300 may access:
- an ML pipeline database 202 that may include candidate ML pipelines, trained ML pipelines and ML primitives,
- a variation operator database 204 including variation operator operators that can be applied to ML pipelines of the ML pipeline database 202, and
- a training data database 206 including training data for the ML pipelines of the ML pipeline database 202.

In some non-limiting implementations of the present technology, the system 200 can be implemented as a conventional computer server and may comprise some or all of the components of the computer system 100 of Figure 1. In one non-limiting example, the system 200 is implemented as a Dell^{™} PowerEdge^{™} Server running the Microsoft^{™} Windows Server^{™} operating system, but can also be implemented in any other suitable hardware, software, and/or firmware, or a combination thereof. In the depicted non-limiting embodiments of the present technology, the system 200 is a single server. In alternative non-limiting embodiments of the present technology, the functionality of the system 200 may be distributed across multiple systems and may be, for example and without limitations, implemented via multiple servers.

In some implementations, the system 200 is communicatively coupled to a user device 250 over a communication network 50 via any wired or wireless communication link including, for example, 4G, LTE, Wi-Fi, or any other suitable connection. The user device 70 may be associated with a user desiring to obtain a target MLA optimized for executing a predetermined task. In some non-limiting implementations of the present technology, the communication network 50 may be implemented as the Internet. In other implementations of the present technology, the communication network 50 can be implemented differently, such as any wide-area communication network, local-area communication network, a private communication network and the like. How the communication links between the user device 70 and the system 200 are implemented will depend *inter alia* on how the user device 70 and the system 200 are implemented. The user device 70 may transmit instructions to the system 200 and receive an MLA or an output thereof from the system 200.

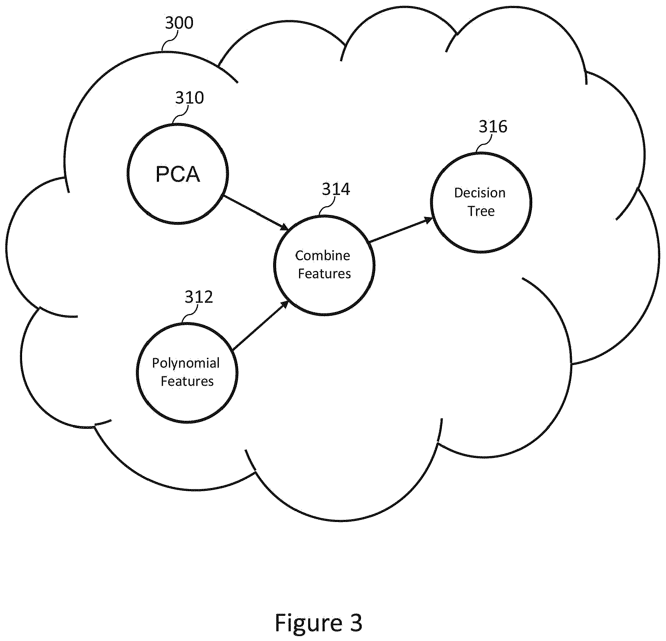

Turning now to Figure 3, an exemplary embodiment of an ML pipeline 300 is illustrated. Broadly speaking, a ML pipeline may be defined as a framework allowing (1) converting raw data to data usable by a ML algorithm, (2) training an ML algorithm and/or (3) using the output of the trained ML algorithm (the ML model) to perform pre-determined action. Analogy to the concept of "pipeline" aims at illustrating a process through which data is processed to generate an actionable software module, i.e., an ML model.

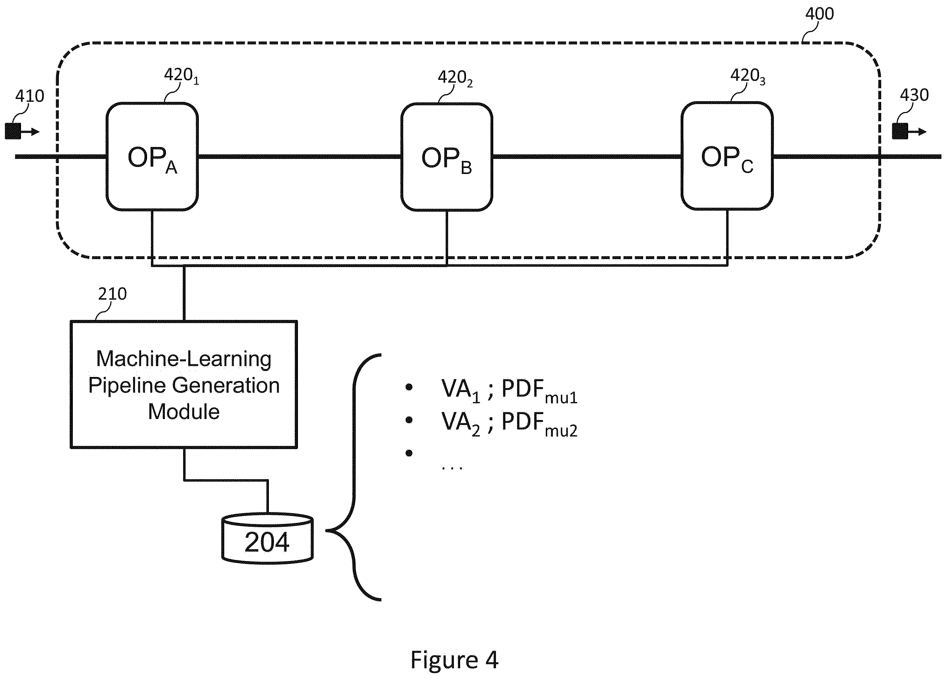

In some embodiments, turning raw data into data usable by the ML algorithm may be referred to as "pre-processing". Without being limitative, pre-processing may comprise feature extraction methods, feature selection methods and/or cleaning data methods. In some embodiments, the pre-processing may comprise executing principal component analysis (PCA) which may be summarized as a linear dimensionality reduction using singular value decomposition of a dataset to project the dataset to a lower dimensional space. In some embodiments, the pre-processing may also comprise a combine features method allowing creation of a new data frame from two other data frames. In some embodiments, this combination may comprise the output from previous nodes (namely PCA and Polynomial features in FIG. 4) which may create a transformed dataset which has potentially gained more information from the two different pre-processing methods. Other pre-processing approaches may also comprise, for example, and without being limitative, Binarizer, FeatureAgglomeration, MaxAbsScaler, MinMaxScaler, Normalizer, PCA, RBFSampler, RobustScaler, StandardScaler, SelectFwe, SelectPercentile, VarianceThreshold.

In some embodiments, the ML pipeline may also comprise a step of selecting an ML algorithm amongst a plurality of ML algorithms. Non limitative examples of ML algorithms may include non-linear algorithm, linear regression, logistic regression, decision tree, support vector machine, naive bayes, K-nearest neighbors, K-means, random forest, dimensionality reduction, neural network, gradient boosting, adaboost, lasso, elastic net, ridge, bayesian ridge, Automatic Relevance Determination (ARD) regression, Stochastic Gradient Descent (SGD) regressor, passive aggressive regressor, k-neighbors regressor and/or Support Vector Regression (SVR). Other ML algorithms may also be envisioned without departing from the scope of the present technology.

In some embodiments, once selection of the ML algorithm is made, configuration of parameters relating to the ML algorithm may be executed. In some embodiments, the parameters may comprise hyper parameters (e.g., parameters of a classifier, regressor etc) which may be configured prior to the learning process to which the ML algorithm is subjected to. In some embodiments, the parameters may be polynomial features allowing better ML model fitting with a dataset. The polynomial features may be implemented as a feature matrix consisting of all polynomial combinations of features with a degree less than or equal to a specified degree. The configuration of parameters of the ML algorithm may be executed before, during and/or after the training of the ML algorithm on a given dataset. In some embodiments, the trained ML algorithm defining the ML model may be further optimized upon being used, for example, by further refining one or more of the parameters.

As a person skilled in the art of the present technology may appreciate further to the reading of the above paragraphs, a ML pipeline may be defined as a process comprising one or more of (1) pre-processing a dataset, (2) selecting an algorithm, (3) configuring parameters associated with the algorithm, (4) training the algorithm on a dataset, (5) using the trained algorithm; (6) optimizing the trained algorithms and/or (7) the trained ML model itself (i.e., a model). Some variation operators may be envisioned without departing from the scope of the present technology, for example a ML pipeline may comprise an input dataset, an ML algorithm with hyperparameters and optionally one or more pre-processing methods having different parameters. In some embodiments, the ML pipeline is a ML model. In some embodiments, the ML pipeline may be defined as a process leading to a trained ML model based on a dataset. The trained ML model may then be ready to be put into production, for example, in the context of operating a data center. In some embodiments, a ML pipeline may be described as a set of characteristics comprising one or more primitives.

Referring back to FIG. 3, the ML pipeline 300 is characterized by a PCA parametrization 310 (i.e., a set of parameters defining the PCA), polynomial features 312 (i.e., a set of parameters defining the polynomial features), combine features 314 and a decision tree 316. The PCA parametrization 310, the polynomial features 312, the combine features 414 and the decision tree 316 may be referred to as characteristics or primitives defining the ML pipeline 300. In some embodiments, a primitive relates to the field of genetic programming (GP). A primitive may be defined as a set of parameters, including a function and enumerated parameters (type and arity, not the values) possible for the function. Primitives may be associated with terminals (values with the type required by primitives) which may give an expression. In the case of the field of AutoML, primitives may be composed of different ML algorithms in addition to the different pre-processing methods. Terminals may be composed of hyperparameters for ML algorithms and parameters for pre-processing methods. In some embodiments, it may be possible to add primitive (new ML algorithm, new pre-processing methods, or others) and/or terminal (other values) in order to grow the search space and thus making new ML pipelines.

Figure 4 illustrates an MLA 400 that may be associated with the ML pipeline 300. Broadly speaking, the MLA 400 may receive input data 410 as an input an execute one or more operations 420 (three of which being depicted in Figure 4 as operations 420₁, 420₂ and 420₃) successively applied to the input data 410. The MLA 400 may further outptut outptut data 430. In some implementations, the MLA 300 may be a neural-network (NN) architecture such as, for example and without limitations, a multi-layer perceptron, a recurrent NN or a Boltzmann Machine. As such, it can be said that the operations 320 may map one or more nodes of a NN architecture.

As will be described in greater details herein after, the ML pipeline generation module 210 may apply variation operators selected from the variation operator database 204 to the MLA 400, thereby modifying operations 420 thereof. Execution of one variation operator may result in, for example and without limitation, adding a layer to the MLA 400, removing a layer therefrom, modifying an activation function thereof, and/or adding and/or removing neurons within a layer thereof. Broadly speaking, upon applying a given variation operator to the MLA 400, performances thereof may be assessed to determine an effectiveness of the given variation operator on the MLA 400. The MLA 400 may thus be iteratively modified by applying successive variation operator thereto, until a target performance and/or a pre-determined number of iterations is reached. For example, applying a variation operator to the ML pipeline corresponding to the MLA 400 may result in modification of one or more of the operations 420₁, 420₂ and 420₃, a modification of the PCA parametrization, polynomial features, combine features 314 and/or the decision tree of said ML pipeline.

More specifically, in the context of the present disclosure, a variation operator applied to a given MLA may consist of an application of a crossover or a mutation. Other type of variation operators of an MLA may be envisioned without departing from the scope of the present technology. As an example, applying a crossover may consist of taking two MLAs of distinct ML pipelines sharing at least one similar primitive and exchanging the primitive. When two ML pipelines share a primitive (e.g., Principal Component Analysis (PCA)), it does not necessarily entails that the primitives have a same configurations (e.g., value of one or more parameters associated with the primitive). Therefore, by "exchanging" primitives, two new different ML pipelines may be created.

As another example, applying a mutation may consist of randomly choose a mutation, such as "Insert", "Replacement" and/or "Shrink". In some embodiments, "Insert" involves inserting a new primitive matching input/output in an ML pipeline (i.e., inserting a new primitive matching input/output in an ML pipeline). In some embodiments, "Replacement" involves replacing a primitive by another matching input/output in an ML pipeline (i.e., replacing a primitive by another matching input/output in an ML pipeline). In some embodiments, "Shrink" involves removing a primitive in an ML pipeline (i.e., removing a primitive in a ML pipeline). In the illustrated example, primitives may be an ML algorithm and/or a preprocessor.

It should also be noted that, upon modifying a given MLA such as the MLA 400, the system 200 associates a probability density function (PDF) to each of the variation operators for the given MLA. As will be described in greater details herein below, the PDF of the variation operators are iteratively updated to generate the target ML pipeline, or "optimized" ML pipeline. As such, the PDF of the variation operators are associated with the MLA 400 being optimized. The same variation operators may have different PDF for different MLAs.

In one aspect, the system 200 generates an optimized ML pipeline for executing a predetermined task. To do so, the system 200 may receive (e.g., from the user device 70) a description of the pre-determined task. The system 200 may identify ML pipelines that are relevant to the pre-determined task. The identified ML pipelines may be referred to as "candidate ML pipelines" for the pre-determined task. Variation operators are successively applied to each of the candidate ML pipelines to form corresponding optimized ML pipelines, and performances thereof are evaluated at each iteration to determine which variation operator should be applied to any of the candidate ML pipelines. Performances of the optimized ML pipelines may be compared to identify a best performing modified ML pipeline among the optimized ML pipelines.

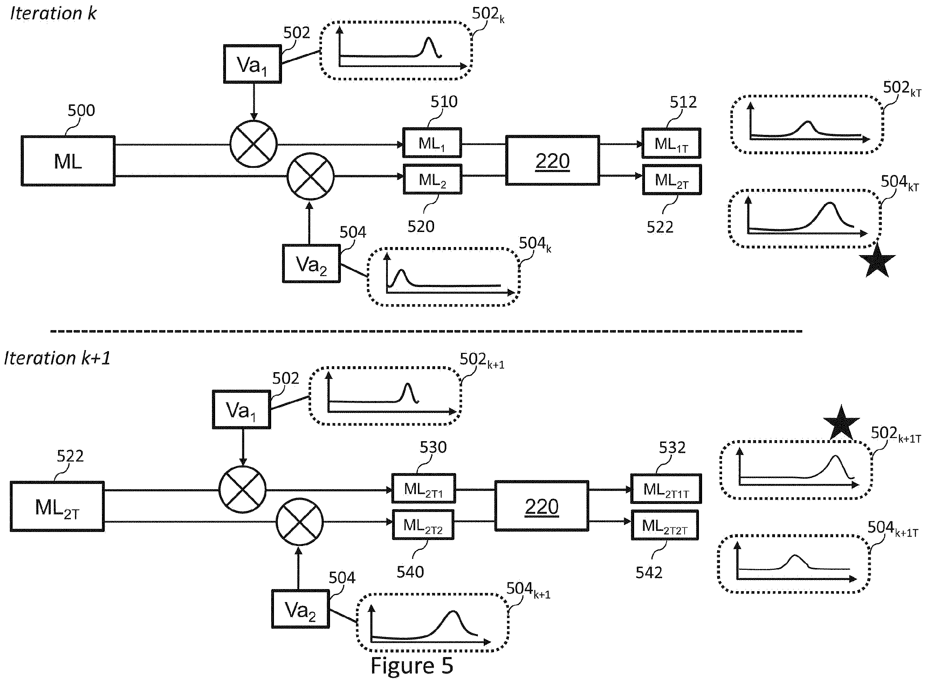

Iterative optimization of an ML pipeline 500 will now be described with reference to Figure 5. It should be noted that the same process may be applied to each of the candidate ML pipelines in parallel or successively. More specifically, two consecutive iterations denoted *k* and *k*+*1* of the iterative optimization are described. The ML pipeline 500 may have been selected as a candidate ML pipeline by the system 200.

At iteration *k*, one or more variation operators are separately applied to the ML pipeline 500. In this example, a first variation operator 502, associated with a PDF 502ₖ at iteration *k*, and a second variation operator 504, associated with a PDF 504ₖ at iteration *k* are separately applied to the ML pipeline 500. As depicted on Figure 5, the PDFs are illustrated by a curve whose ordinate axis is a probability axis and whose abscissa axis is a performance axis.

In some implementations, the PDFs of each of the variation operators at an initial iteration of the optimization process for a given ML pipeline are a same default distribution. For example, the initial PDFs of the variation operators may be a normal distribution with the same mean and standard deviations. Other initial PDFs are contemplated in alternative implementations, this aspect is not limitative. In some implementations, the default distribution is selected and set based on the pre-determined task, a data type of the training data, the plurality of candidate ML pipelines, and/or the plurality of variation operators available in the variation operator database 204.

Application of the first variation operator 502 to the ML pipeline 500 results in modified ML pipeline 510 that is further trained by the ML pipeline training module 220 resulting in a trained modified ML pipeline 512. In a similar manner, application of the second variation operator 504 to the ML pipeline 500 results in modified ML pipeline 520 that is further trained by the ML pipeline training module 220 resulting in a trained modified ML pipeline 522.

For example and without limitation, a given ML pipeline may use training datasets of the training data database 206 that comprise a training input signal and a training label, or "ground-truth label". During a given training, the training label can be further compared to an output of the ML pipeline (i.e., of the corresponding MLA) such that errors of may be backpropagated to update the model parameters. In at least some embodiments of the present technology, the comparison of the output of the ML pipeline during training against the ground-truth label may be performed by employing a loss function for determining a "loss" that is used for adjusting the ML pipeline during the respective training. Illustrative examples of loss functions include Root Mean Square Error, Precision-based loss function, Recall-based loss function, confusion matrix-based loss function, or any other suitable loss function.

Once the trained modified ML pipelines 512, 522 are obtained, corresponding performance scores are determined using, for example and without limitation, a training dataset of the training data database 206, or any data associated with ground-truth labels. The performance scores of the trained modified ML pipelines 512, 522 may be respectively based on a distance between respective output thereof and ground-truth labels of the training dataset. In the context of the present disclosure, a distance measure is an objective score that summarizes the relative difference between two objects in a problem domain. The smaller the distance measure between two objects (typically data describing something), the more similar the items are. Some types of distance measures that are typically used in machine learning are Euclidian distance, Hamming distance, Manhattan distance, Minkowski distance. For example and without limitation, a precision or a recall (i.e. an ability of a model to find all the relevant cases within a dataset) to measure a performance of a model on a given set of data.

Once the performance scores of the trained modified ML pipelines 512, 522 are determined, the PDFs of the variation operators 502, 504 are dynamically adjusted based respectively thereon. More specifically, performance scores of the trained modified ML pipelines 512 are used to update the PDF 502ₖ, thereby forming the updated PDF 502_{kT}, and performance scores of the trained modified ML pipelines 522 are used to update the PDF 504ₖ, thereby forming the updated PDF 504_{kT}.

A dynamic adjustment of a PDF may be performed as follows. PDFs are updated according to the distribution used, and the performances returned in response to execution of the corresponding variation operator. In this implementation, the PDFs used are Gaussian distributions, noted as N(µ,σ). At a first iteration of the optimization process, the PDFs are set to N(0,1). In other words, the performance of all variation operators is arbitrarily set to 0 (with a standard deviation of 1 (maximum achievable performance). In response to the performance of a given trained modified ML pipelines having been established at iteration *k*, the corresponding PDF is updated to a gaussian distribution N(uₖ, 1/(k+1)), where uₖ being an empirical average performance of the previous *k* iterations (with u₀= 0).

Therefore, the dynamic adjustment of the PDFs depends on, without limitation, a loss function used to determine the performance of the trained modified ML pipeline, type of dataset and the types of variation operators.

Referring back to Figure 5, the system 200 further selects one of the trained modified ML pipelines as a result of iteration *k* based on the updated PDFs of the variation operators. For example and without limitation, the system 200 may draw one sample from each PDF 502_{kT}, 504_{kT} (i.e. according to the normal distributions thereof in this example), the PDF for which the drawn sample has the highest value being selected for the iteration *k*. The trained modified ML pipeline having been modified by the variation operator associated with the selected PDF is identified as an output of the current iteration. As a person skilled in the art of the present technology may appreciate, the variation operator having led to the most performing trained modified ML pipeline will be more likely to be selected by the system 200. In this example, one can assume that the second variation operator 504 has been selected (as indicated by a star symbol on Figure 5). This amounts to selecting the trained modified ML pipelines 522 as an output of the iteration *k*.

Before the next iteration *k*+*1,* the PDF of the variation operator corresponding to the selected trained modified ML pipeline is updated, while the other PDF are not. In this example, assuming the trained modified ML pipeline 522 is selected, only the PDF associated with the variation operator 504 is updated to be PDF 504_{kT}.

At iteration *k*+*1,* the selected trained modified ML pipeline 522 is used as an input. The one or more variation operators (variation operators 502 and 504 in this example) are separately applied to the ML pipeline 522. In this iteration, the first variation operator 502 is associated with a PDF 502ₖ₊₁ at iteration *k*+*1* that is the same than PDF 502ₖ, and the second variation operator 504 is associated with a PDF 504ₖ₊₁ at iteration *k*+*1* (that is equal to PDF 504_{kT} in this example).

Application of the first variation operator 502 to the ML pipeline 522 results in modified ML pipeline 530 that is further trained by the ML pipeline training module 220 resulting in a trained modified ML pipeline 532. In a similar manner, application of the second variation operator 504 to the ML pipeline 522 results in modified ML pipeline 540 that is further trained by the ML pipeline training module 220 resulting in a trained modified ML pipeline 542.

Once the performance scores of the trained modified ML pipelines 532, 542 are determined, the PDFs of the variation operators 502, 504 are dynamically adjusted based respectively thereon. More specifically, performance scores of the trained modified ML pipelines 512 are used to update the PDF 502ₖ₊₁, thereby forming the updated PDF 502_{k+1T}, and performance scores of the trained modified ML pipelines 522 are used to update the PDF 504ₖ₊₁, thereby forming the updated PDF 504_{k+1T}.

In some implementations, the system 200 selects one of the trained modified ML pipelines as a result of iteration *k*+*1* based on the updated PDFs of the variation operators. In this example, it is assumed that the first variation operator 504 has been selected (as indicated by a star symbol on Figure 5). This amounts to selecting the trained modified ML pipelines 532 as an output of the iteration *k+1.*

Therefore, Figure 5 illustrates that the PDFs of the variation operators are dynamically adjusted. As it could become apparent to the person skilled in the art of the present technology person, a framework of the described dynamic adjustment of the probability PDFs may thus involve employing a Thompson Sampling strategy in which performances of different variation operators are compared to iteratively optimize a given ML pipeline, as described in the iteration *k* and *k*+*1* of Figure 5. The Thompson Sampling strategy may be implemented as described in "A Tutorial on Thompson Sampling", by Daniel J. Russo et al. published in July 2017, the entirety of which is incorporated by reference herein.

Once all the candidate ML pipelines have been iteratively optimized, as described in iterations *k* and *k*+*1*), thereby forming corresponding optimized ML pipelines, the performance scores of the optimized ML pipelines are compared. The optimized ML pipeline having the highest performance score is identified as the target ML pipeline for the pre-determined task.

Broadly speaking, Thompson Sampling is a strategy, or algorithm, tackling the problem by representing the performance of each arm of a Multi-Armed Bandit problem as a distribution, and at each iteration an arm is pulled according to a selection process. The selection process consists in drawing a sample from each distribution, and then selects the related arm that returned the maximum sample's value from its distribution. Once pulled, the reward value is taken in consideration by the distribution. In this manner, the distributions are changed along the iterations, privileging in a smart way the different arms.

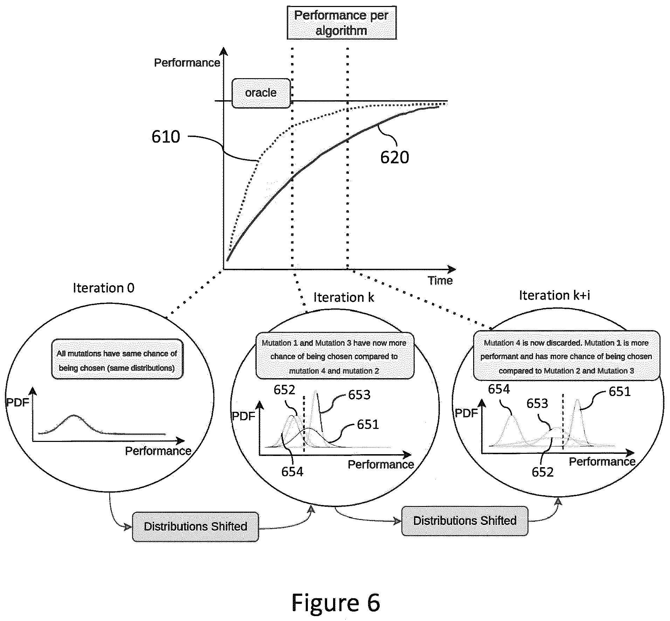

In the context of the present disclosure, each arm is represented as a variation operator (i.e. mutation or crossover) where each variation operator has a performance represented by a distribution (i.e. PDF). Figure 6 illustrates an illustrative evolution of probability distribution functions used to select variations operators on an ML pipeline where the simulated problem is a Time Series Classification (TSC).

Time series classification (TSC) uses supervised machine learning to analyze multiple labeled classes of time series data and then predict or classify the class that a new data set belongs to. TSC is used in many environments where the analysis of sensor data or financial data might need to be analyzed to support a business decision. Accuracy of classification may be critical in these situations. Depending on the data, one type might produce higher classification accuracies than other types.

It should be noted that the PDFs and evolutions thereof may depend on multiple factors:
- problem type (e.g. "classical" classification, regression)
- dataset type (e.g. balanced, imbalanced, sparsed)
- ML algorithm search space (dictionary space)
- metrics optimized (e.g. precision, recall, interpretability, memory, prediction latency, etc.)
- Evolutionary Algorithm Space (i.e. using different evolutionary algorithms, including/excluding different variation operators)

Referring back to Figure 6, performances of two optimizations of an ML pipeline are depicted. Curve 610 represents a Mary-Morstan instance optimized with Thompson Sampling. Curve 620 represents Mary-Morstan instance optimized using a static strategy. As can be seen, having a dynamic selection (Thompson Sampling) of the variation operators gives an acceleration of the optimization. Indeed, low performing variation operators are discarded during Thompson Sampling-based optimization, making the optimization spending less time attempting to train the low performing candidates. More precisely, some variation operators perform local changes (i.e. exploitation) on the candidate (i.e. ML pipeline), while some others perform global changes (i.e. exploration). Thus, through the change of the distributions performed by Thompson Sampling, a trade-off exploration versus exploitation with zero knowledge of the problem tackled is optimized, and no human intervention occurs along the iterations.

The present technology relies on the dynamic adjustment of the ML pipeline described herein also provides without asking any tuning from the user. Hence, the present technology returns better models than choosing the variation operators with static distributions when performed on a similar budget.

On the lower part of Figure 6, the PDFs 651, 652, 653, 654 of different variation operators at different iterations are illustrated. As described herein before, these distributions are used to known which variation operator should be used at a given iteration. In the illustrative implementations of Figure 6, at iteration 0, all the PDFs are equally generated (e.g. gaussians with the same mean and variance).

Therefore, at the iteration 0, all the variation operators have an equal chance of being chosen, i.e. it is equivalent to a uniform distribution for selecting a given variation operator to be applied to a candidate ML pipeline.

At iteration *k*, a sample is taken from each PDF, and the maximum value with its associated variation operator is chosen to be applied to the candidate ML pipeline. It should be noted that this operation is executed for each candidate ML pipeline selected for the predetermined task in the ML pipeline database 202. It should also be noted that the PDFs are fixed during each iteration, they are only updated at the end of a given iteration, i.e. when all the candidate ML pipeline are modified and trained.

In the non-limitative example of Figure 6, PDF 653 is indicative of relatively high performance (high average and low standard deviation) of the corresponding variation operator, by consequence the corresponding variation operator has more chance of being selected compared to the remaining ones. PDF 651 comes in second and has a larger interval, i.e. a higher standard deviation compared to all the mutations but still has a noticeable mean compared to PDF 652 and 654, which makes it more competitive when chosen at this step of the optimization.

At iteration *i*+*k,* PDF 653 does not have the highest mean value anymore and by consequence, the corresponding variation operator has less chance of being chosen.

Thus, it can be said that the iterative process relying on Thompson Sampling strategy disclosed herein promotes the exploitation through the variations that perform local changes on the good known candidate ML pipelines. This can be seen in this example by the shifted bell curve that have higher mean, increasing their chance of being chosen with this strategy. Figure 6 illustrates that the iterative optimization of the candidate ML pipeline as disclosed herein provides faster optimization (i.e. in a reduced number of iterations) compared with static strategies.

Operating large infrastructures connected to the Internet, such as a data center, typically involves monitoring and/or controlling a very large number of hardware equipment while ensuring quality of service and security for clients/users of the data center. Such hardware equipment may comprise servers, cooling systems, power distribution units, networking devices (switch, rooters, etc.) and dedicated systems allowing monitoring, orchestrating and controlling of the various hardware equipment. In certain instances, orchestrating and controlling may involve collecting tremendous amount of data, such as for example, but without being limitative, health monitoring data (e.g., temperature of a hardware component, temperature of a cooling medium, operational status, performance indicator, etc.), data relating to network traffic monitoring/filtering (e.g., to detect or prevent potential attacks or intrusions) and/or data relating to user's behaviors (e.g., to detect or prevent potential frauds). Therefore, the use MLAs to enable automatic building of mathematical models from sample data (i.e. training data) which may then be executed for the purpose of decision/prediction making is particularly suitable for the data center monitoring.

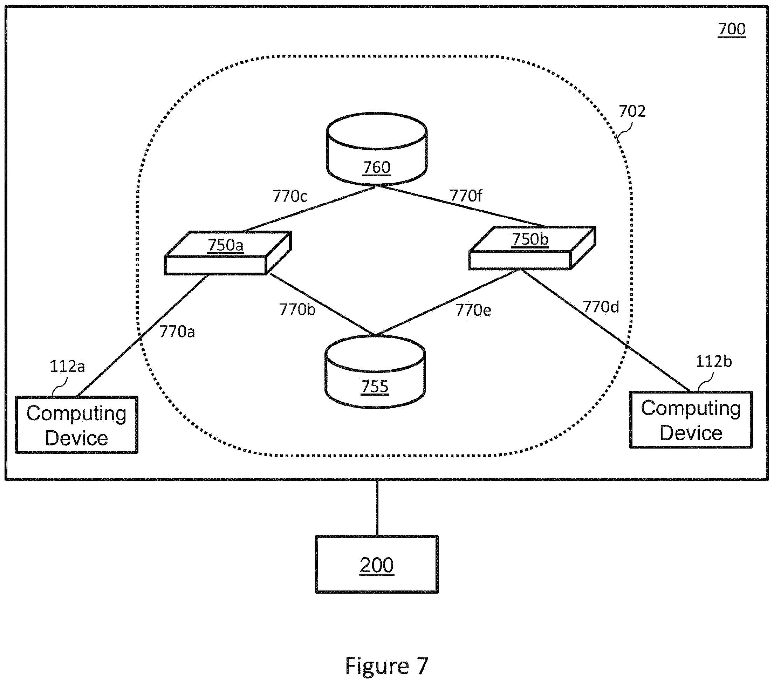

Figure 7 schematically illustrates a data center 700 implementing a network 702 and comprising multiple computing devices, such as computing devices 712a and 712b which may be implemented in accordance with the description of the device 100 of FIG. 1. The computing devices 712a and 712b may implement computing nodes and/or servers or cluster of servers enabling services to users/clients of the data center 700.

The network 702 may provide interconnections for communications between the computing devices through various network devices. The network 702 may include various network devices, such as switches 750a-750b, router devices 755, core router devices 760 and network links 770a-770g. The router devices 755 may connect the network 702 to the Internet and/or to a dedicated network 704. As illustrated, the network 702 may be in communication to the system 200 for assisting in operating, monitoring and/or orchestrating the data center 700.

For example and without limitation, the system may collect and/or access operation data about components of the data centers such as temperatures of the computing devices 112a-112b over time, thereby forming a time series. Other parameters can be monitored such as data flow rates over time at given computing devices of the data center 700, this aspect is not limitative. Said operation data may include very large datasets generated by sensors (e.g., temperature sensors, air sensors, etc.) and/or generated by the various devices implementing the data center 700 (e.g., automatic status reports generated by components such as motherboards of servers, etc.). The system 200 may thus execute methods disclosed herein to obtain a target ML pipeline for executing a pre-determined task over the time series data, such as detecting a potential failure of an equipment, detecting a Denial-of-Service (DoS) attack at the data center 700, or any other pre-determined task using the data collected at the data center 700.

It can thus be said that, in some implementations, the system 200 may perform or assist in performing functionalities relating to the monitoring of the health and/or operations of the data center. Broadly speaking, such functionalities aim at maintaining the data center 700 in operable conditions and determine if maintenance may be required. The maintenance may be reactive (i.e., in response to an identified failure) and/or preventive (i.e., based on a prediction of a potential failure).

As an example, operation data may be generated by the computing devices 112a, 112b (e.g., by the server or clusters of servers), switches 750a-750b, router devices 755, core router devices 2760 and network links 770a-770f. The type of operation data is not limitative and multiple variations may be envisioned without departing from the scope of the present technology. In some embodiments, the operation data may also be leveraged to properly orchestrate deployment or removal of hardware or software components.

It should be noted that the system 200 can be used for any project involving machine learning without being restricted to monitoring of equipment of a data center. Indeed, any task involving optimizing performances (e.g. time/performance constraints) of an MLA may benefit from the disclosed technology.

In some implementations, the system 200 and the methods recited herein may be used to forecast operation parameters. For example, the system 200 may forecast electrical consumption of a data center, to size an electrical infrastructure, bandwidth, network infrastructure and/or cooling requirements thereof. Additionally, or optionally, the system 200 may be used to carry out lower-level forecasts to detect potential risks of disjunction of electrical equipment of the data center.

In the context of monitoring computing devices (e.g. servers) of a data center and operation parameters measured (e.g. network bandwidth, CPU temperature), undesirable behavior that doesn't comply with a specified set of rules, such as crypto mining, under- or over-utilization of a server may be detected. Monitoring of computing devices with optimized MLA using the disclosed technology may be used to eventually upgrade services (to improve quality of service) or downgrade services (to save money) of a given user of the computing device.

It may be appreciated that, given the very large amount of data relating to operations of the data center 700 (e.g., operation data, network data, usage data, user data and/or content data), relying on ML approaches to process the very large amount of data and generate a relevant ML pipeline that properly suits an operational context that one or more of the system 200 needs to adapt to is a technical problem. This technical problem is further emphasised by a need to generate an appropriate ML pipeline within a limited period of time so as to adapt real-time operational needs while having access to limited processing and/or memory resources. As the person skilled in the art of the present technology will appreciate, generating ML pipelines and ML models suited for a large set of data typically involves heavy processing and/or large memory space usage over a long period of time. This is one of the limitations of known approaches, such as evolutionary algorithm approaches, which are known to be requiring extensive processing resources when applied to large sets of data. These constraints are limitative in the context of real-time and real-life operations of large infrastructures, such as, but not limited to, data centers. There is therefore a need for an improved approach to generating ML pipelines and ML models such as the approach proposed by the present technology.

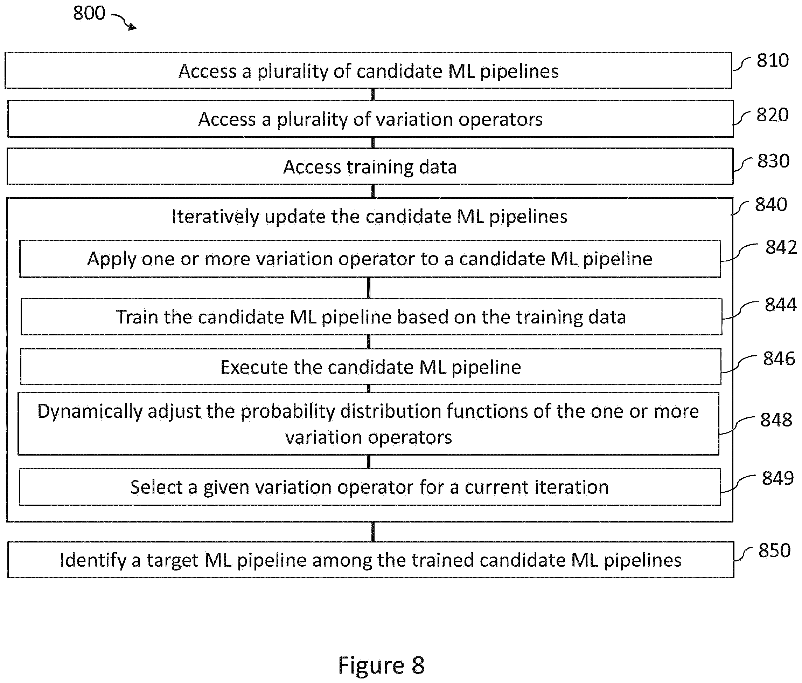

Figure 8 is a flow diagram of a method 800 for automatically generating a target machine learning (ML) pipeline for executing a pre-determined task according to some implementations of the present technology. In some implementations, the pre-determined task is a time series classification task, the training data comprising time series data. In the same or other implementations, the method 800 may be executed to push a target machine learning (ML) pipeline in production mode in an infrastructure of a data center for monitoring said data center. For example and without limitations, the pre-determined task may include identifying potential failure of an equipment (e.g. server, computing device, power distribution unit, a networking device such as a router, etc.) of a data center based on time series data indicative of an operation parameter (e.g. a temperature) of the equipment, identifying potential failure of a cooling device such as a dry cooler of a data center based on the time series data, the time series data being indicative of an operation parameter (e.g. a temperature of a cooling fluid flowing therein) of the cooling device, and/or identifying a potential Denial-of-Service attack at the a data center based on time series data indicative of a data flow rate of at least one computing device thereof.

In one or more aspects, the method 800 or one or more steps thereof may be performed by a processor or a computer system, such as the system 200. The method 800 or one or more steps thereof may be embodied in computer-executable instructions that are stored in a computer-readable medium, such as a non-transitory mass storage device, loaded into memory and executed by a CPU. Some steps or portions of steps in the flow diagram may be omitted or changed in order.

It will be appreciated that at least some of the operations of the method 800 may also be performed by computer programs, which may exist in a variety of forms, both active and inactive. Such as, the computer programs may exist as software program(s) comprised of program instructions in source code, object code, executable code or other formats. Any of the above may be embodied on a computer readable medium, which include storage devices and signals, in compressed or uncompressed form. Representative computer readable storage devices include conventional computer system RAM (random access memory), ROM (read only memory), EPROM (erasable, programmable ROM), EEPROM (electrically erasable, programmable ROM), and magnetic or optical disks or tapes. Representative computer readable signals, whether modulated using a carrier or not, are signals that a computer system hosting or running the computer program may be configured to access, including signals downloaded through the Internet or other networks. Concrete examples of the foregoing include distribution of the programs on a CD ROM or via Internet download. In a sense, the Internet itself, as an abstract entity, is a computer readable medium. The same is true of computer networks in general.

The method 800 includes accessing, at operation 810, a first database, such as the ML pipeline database 202 including a plurality of candidate ML pipelines. Each candidate ML pipeline is associated with a set of hyperparameters and including one or more operations.

In some implementations, the candidate ML pipelines are configured to perform a time series classification (TSC)-related task.

The method 800 further includes accessing, at operation 820, accessing a second database comprising a plurality of variation operators, such as the variation operator database 204. Each variation operator is associated with a probability distribution function (PDF) and configured to be applied to one or more of the candidate ML pipelines. As described herein before, an application of a given variation operator on a given candidate ML pipeline results in an update of at least one of the hyperparameters and the one or more operations of the candidate ML pipelines. In some implementations, each variation operator includes at least one of a mutation operation and a crossover operation. In the same or other implementations, the probability distribution functions of the variation operators are initially set to a same default distribution. For example, the default distribution may be a normal distribution. The default distribution may be based on at least one of the pre-determined task, a data type of the training data, the plurality of candidate ML pipelines, and the plurality of variation operators.

The method 800 further includes accessing, at operation 830, accessing a third database comprising training data.

The method 800 further includes iteratively updating, at operation 840, the candidate ML pipelines. More specifically, the method 800 includes applying, at sub-operation 842, in parallel, one or more of the variation operators to the candidate ML pipeline. The method 800 includes applying, at sub-operation 844, training the candidate ML pipeline based on the training data. For example, the candidate ML pipelines may be trained by the ML pipeline training module 220. The method 800 includes executing, at sub-operation 846, the candidate ML pipeline dataset associated with ground-truth labels to determine a performance score for each of the trained candidate ML pipelines. In some implementations, the performance score is determined based on a distance between the ground-truth labels data and an output of the trained candidate ML pipelines.

The method 800 includes dynamically adjusting, at sub-operation 848, the probability distribution functions of the one or more variation operators based on the performance scores. In some implementations, the dynamically adjustment of the probability distribution functions involves employing a Thompson Sampling strategy.

The method 800 includes selecting, at sub-operation 849, a given variation operator among the one or more variation operators based on the probability distribution functions thereof for a current iteration. In some implementations, selecting a given variation operator among the plurality of variation operators comprises selecting the variation operator having the probability distribution function having the highest mean value among the variation operators. In the same or other implementations, selecting a given variation operator among the plurality of variation operators includes sampling a sample from each of the PDFs of the variation operators following the corresponding PDF and selecting the variation operator corresponding to the sample having the highest value.

In some implementations, the iterative update of the candidate ML pipelines stops once a pre-determined time span after a first update of the candidate ML pipelines has elapsed. In some other implementations, the iterative update of the candidate ML pipelines stops once a pre-determined number of iterations is reached. In some yet other implementations, the iterative update of the candidate ML pipelines stops once a performance score of at least one of the trained candidate ML pipelines is above a pre-determined threshold.

The method 800 may end with identifying, at operation 850, a given candidate ML pipeline having a highest performance score as the target ML pipeline subsequent to the iteratively update of the candidate ML pipelines.

In some implementations, the method 800 further includes accessing time series data representative of operation parameters of equipment of the data center, and ends with operating the identified trained candidate ML pipeline using the time series data to perform at least one of (i) identifying potential failure of a computing device of a data center based on the time series data, the time series data being indicative of a temperature of the computing device, and/or (ii) identifying a potential Denial-of-Service attack at the data center based on the time series data, the time series data being indicative of a data flow rate of at least one computing device thereof

While the above-described implementations have been described and shown with reference to particular steps performed in a particular order, it will be understood that these steps may be combined, sub-divided, or re-ordered without departing from the teachings of the present technology. At least some of the steps may be executed in parallel or in series. Accordingly, the order and grouping of the steps is not a limitation of the present technology.

It should be expressly understood that not all technical effects mentioned herein need to be enjoyed in each and every embodiment of the present technology.

Modifications and improvements to the above-described implementations of the present technology may become apparent to those skilled in the art. The foregoing description is intended to be exemplary rather than limiting. The scope of the present technology is therefore intended to be limited solely by the scope of the appended claims.

## Claims

1. A computer-implemented method for pushing a target machine learning (ML) pipeline in production mode in an infrastructure of a data center for monitoring said data center, the method comprising:
accessing a plurality of candidate ML pipelines configured to perform a time series classification (TSC)-related task, each candidate ML pipeline being associated with a set of hyperparameters and including one or more operations;
accessing a plurality of variation operators, each variation operator being associated with a probability distribution function and configured to be applied to one or more of the candidate ML pipelines, an application of a given variation operator on a given candidate ML pipeline resulting in an update of at least one of the hyperparameters and the one or more operations of the candidate ML pipelines;
accessing training data;
iteratively updating the candidate ML pipelines, an update iteration comprising:
applying one or more of the variation operators to the candidate ML pipeline;
training the candidate ML pipeline based on the training data;
executing the trained candidate ML pipeline on a dataset associated with ground-truth labels to determine a performance score, the performance score being indicative of a distance between respective an output of the candidate ML pipeline and the ground-truth labels of the dataset;
dynamically adjusting the probability distribution functions of the one or more variation operators based on the performance scores; and
selecting a given variation operator among the one or more variation operators based on the dynamically adjusted probability distribution functions thereof;
identifying a given trained candidate ML pipeline having a highest performance score as the target ML pipeline subsequent to the iteratively update of the candidate ML pipelines;
accessing time series data representative of operation parameters of equipment of the data center, the time series data being indicative of at least one of (i) an operation parameter of the equipment, (ii) an operation parameter of the cooling device, and/or (iii) a data flow rate of at least one computing device; and
operating the identified trained candidate ML pipeline using the time series data to perform at least one of (i) identifying potential failure of an equipment of a data center based on the time series data, (ii) identifying potential failure of a cooling device of a data center based on the time series data, and/or (iii) identifying a potential Denial-of-Service attack at the data center based on the time series data.

2. The computer-implemented method of claim 1, wherein selecting a given variation operator among the one or more variation operators based on the probability distribution functions thereof comprises:
draw one sample from each dynamically adjusted probability distribution function;
identifying the dynamically adjusted probability distribution function for which the sample has a highest value among the drawn samples; and
selecting the variation operator that caused adjustment of the identified probability distribution function.

3. The computer-implemented method of claim 1, wherein selecting a given variation operator among the plurality of variation operators comprises:
selecting the variation operator having the probability distribution function having the highest mean value among the variation operators.

4. The computer-implemented method of any one of claims 1 to 3, wherein each variation operator includes at least one of a mutation operation and a crossover operation.

5. The computer-implemented method of any one of claims 1 to 4, wherein the predetermined task is a time series classification task, the training data comprising time series data.

6. The computer-implemented method of any one of claims 1 to 5, wherein the probability distribution functions of the variation operators are initially set to a same default distribution.

7. The computer-implemented method of claim 6, wherein the default distribution is a normal distribution.

8. The computer-implemented method of claim 6 or 7, wherein the default distribution is based on at least one of:
the pre-determined task,
a data type of the training data,
the plurality of candidate ML pipelines, and
the plurality of variation operators.

9. The computer-implemented method of any one of claims 1 to 8, wherein the iterative update of the candidate ML pipelines stops once at least of one:
a pre-determined time span after a first update of the candidate ML pipelines has elapsed,
a pre-determined number of update iterations is reached, and
a performance score of at least one of the trained candidate ML pipelines is above a pre-determined threshold.

10. The computer-implemented method of any one of claims 1 to 9, wherein the dynamically adjustment of the probability distribution functions involves employing a Thompson Sampling strategy.

11. The computer-implemented method of any one of claims 1 to 10, wherein the one or more of the variation operators are applied in parallel to the candidate ML pipeline.

12. The computer-implemented method of any one of claims 1 to 11, wherein the equipment includes at least one of a server, a power distribution unit and a networking device of the data center.

13. The computer-implemented method of any one of claims 1 to 12, wherein the operational parameter comprises at least one of a temperature and a network bandwidth of the equipment.

14. A system comprising a controller and a memory storing a plurality of executable instructions which, when executed by the controller, cause the system to perform the method of any one of claims 1 to 13.

15. A non-transitory computer-readable medium comprising computer-readable instructions that, upon being executed by a system, cause the system to perform the method of any one of claims 1 to 13.
